# EUROPÄISCHE PATENTSCHRIFT

(11) **EP 1 567 753 B1**
(45) Veröffentlichungstag und Bekanntmachung des Hinweises auf die Patenterteilung: **25.02.2009**
(21) Anmeldenummer: 03779892.3
(22) Anmeldetag: 12.11.2003
(51) Int. Cl.: F01N 3/36, F01N 3/08, F01N 3/025, F01N 3/035, F01N 3/20, F01N 5/02

(54) **KRAFTFAHRZEUG MIT EINEM DIESEL-ANTRIEBSMOTOR**
MOTOR VEHICLE PROVIDED WITH A DIESEL PROPULSION ENGINE
VEHICULE AUTOMOBILE A MOTEUR D'ENTRAINEMENT DIESEL

(30) Priorität: 05.12.2002 DE 10256769
(43) Veröffentlichungstag der Anmeldung: 31.08.2005
(73) Patentinhaber: EMCON Technologies Germany (Augsburg) GmbH, 86154 Augsburg (DE)
(72) Erfinder: RANALLI, Marco, 86199 Augsburg (DE); SCHMIDT, Stefan, 86462 Langweid (DE); MAYR, Andreas, 86405 Waltershofen (DE); KLEMENT, Jürgen, 86663 Asbach-Bäumenhain (DE)
(74) Vertreter: Prinz & Partner
(86) Internationale Anmeldenummer: PCT/EP2003/012614
(87) Internationale Veröffentlichungsnummer: WO 2004/051059

(56) Entgegenhaltungen:
- EP-A- 0 132 166
- EP-A- 0 743 429
- DE-A- 3 139 565
- DE-A- 19 504 183
- DE-A- 19 533 355
- DE-A- 19 717 544
- FR-A- 2 731 746
- US-A- 3 908 371
- US-A1- 2002 038 542
- US-B1- 6 170 259
- PATENT ABSTRACTS OF JAPAN Bd. 0122, Nr. 92 (M-729), 10. August 1988 (1988-08-10) & JP 63 068714 A (MAZDA MOTOR CORP), 28. März 1988 (1988-03-28)

## Beschreibung

Die vorliegende Erfindung betrifft ein Kraftfahrzeug mit einem Diesel-Antriebsmotor, dessen Abgasanlage eine diskontinuierlich regenerierbare Abgasreinigungsvorrichtung aufweist. Diskontinuierlich regenerierbare Abgasreinigungsvorrichtungen in diesem Sinne sind insbesondere Dieselpartikelfilter und NOₓ-Speicherkatalysatoren.

Zur Einhaltung umweltgesetzlicher Vorgaben werden die Abgase von verbrennungsmotorisch angetriebenen Kraftfahrzeugen einer Reinigung unterzogen. Namentlich werden zur Reduktion der partikelförmigen Emissionen der Abgase von durch einen Dieselmotor angetriebenen Kraftfahrzeugen geeignete Partikelfilter eingesetzt. Derartige Partikelfilter müssen von Zeit zu Zeit regeneriert werden, indem die auf der Filteroberfläche angesammelten Partikel abgebrannt werden. Aufgrund der bei modernen Dieselmotoren relativ niedrigen Abgastemperaturen muß selbst bei Verwendung von Kraftstoffadditiven, die die ohne derartige Additive je nach Rußzusammensetzung zwischen 470 °C und 600 °C liegende Rußentzündungstemperatur um ca. 100 °C zu senken vermögen, allerdings langfristig zu einer Verstopfung des Partikelfilters führen und dessen Reinigung erforderlich machen, die Abgastemperatur zur Einleitung der Regeneration durch geeignete Maßnahmen bzw. Einrichtungen angehoben werden, wenn eine Filterregeneration auch außerhalb des Vollastbetriebs möglich sein soll.

Vorgeschlagen wurden hierzu diverse dem Partikelfilter vorgeschaltete Brenner (vgl. z.B. DE 19504183 A1 und DE 19717544 A1). Nachteilig ist dabei allerdings der erhebliche bauliche und finanzielle Aufwand, der durch Integration des vergleichsweise großen Brenners in die Abgasanlage erheblich vergrößerte erforderliche Einbauraum sowie die nachteilige Beeinflussung der Strömungsverhältnisse innerhalb der Abgasleitung durch den Brenner.

US 3 908 371 A offenbart einen abgasbeheizten Verdampfer für Kraftstoff, welcher nach Verdampfung in den Abgasstrom eingedüst wird.

Eine im Hinblick auf einige der vorstehend genannten Gesichtspunkte günstigere Lösung ist in der EP 132166 A1 vorgeschlagen worden, indem eine niedrigsiedende organische Flüssigkeit an einer in das dem Partikelfilter vorgeschaltete abgasführende Bauteil ragenden Glühkerze verdampft und der Dampf entweder nach seiner Durchmischung mit dem sauerstoffhaltigen Abgas an der Spitze der Glühkerze entzündet oder aber - ohne Entzündung - dem Abgasstrom zugemischt wird. Im zuletzt genannten Fall erfolgt eine Temperaturerhöhung des dem Partikelfilter zugeleiteten Abgases durch katalytische Oxidation des Dampfes der organischen Flüssigkeit in einem katalytisch beschichteten Bereich des Partikelfilters. Besonderer Nachteil dabei ist insbesondere der mit der Bevorratung der niedrigsiedenden organischen Flüssigkeit verbundene technische und logistische Aufwand. Ferner setzt die Regeneration des Rußfilters unter Einsatz dieser Heizeinrichtung Abgastemperaturen von über 450 °C voraus, die bei modernen Dieselmotoren nur unter Vollast erreicht werden.

Einen vergleichbaren Ansatz verfolgt die DE 19533355 A1, gemäß der die Temperatur des Abgases zum Zwecke der Regeneration eines Partikelfilters angehoben wird, indem ein Hilfsbrennstoff, insbesondere ein Brenngas, in einem dem Filter vorgeschalteten Oxidationskatalysator unter Ausnutzung des Restsauerstoffs im Abgasstrom und im wesentlichen ohne zusätzliche Verbrennungsluftzufuhr katalytisch verbrannt wird. Die sich dabei ergebenden Nachteile sind die gleichen wie vorstehend im Zusammenhang mit der EP 132166 A1 beschrieben.

Die DE 3139565 A1, aus der sich ein Kraftfahrzeug der gattungsgemäßen Art herleiten läßt, beschreibt die Einspritzung von Dieselkraftstoff über Zerstäuberdüsen in oder unmittelbar vor einen katalytisch beschichteten Bereich eines Partikelfilters, um auf diese Weise durch katalytische Oxidation des Kraftstoffs die Abgastemperatur zu erhöhen. Um die katalytische Oxidation einzuleiten, ist in den katalytisch beschichteten Bereich des Partikelfilters ein elektrisches Heizelement eingebettet. Besondere Nachteile bei dem aus der DE 3139565 A1 bekannten System sind neben der erheblichen Inhomogenität der Temperaturverteilung, daß der zerstäubte Kraftstoff dem Abgasstrom durch teilweises Verdampfen Wärme entzieht und daß die Zerstäuberdüsen unter den in ungereinigtem Abgas eines Dieselmotors herrschenden Bedingungen zum Verstopfen neigen, so daß die betreffende Heizeinrichtung binnen kurzem funktionsuntüchtig wird; dies erklärt, weshalb Systeme nach der DE 3139565 A1 niemals zum Serieneinsatz gelangten.

Schließlich wurde versucht, die Abgastemperatur mittels elektrischer Heizelemente auf die Zündtemperatur des auf dem Partikelfilter angesammelten Rußes zu erhöhen; derartige Versuche wurden allerdings wieder aufgegeben, da die hierfür erforderliche elektrische Leistung in konventionellen Kraftfahrzeugen nicht bereitgestellt werden kann.

Zur Reduzierung des Ausstoßes an Stickoxiden werden zunehmend NOₓ-Speicherkatalysatoren eingesetzt. Um diese zu regenerieren, ist eine Anfettung des Abgases erforderlich. Während dies bei Ottomotoren unproblematisch ist, bedarf es bei Dieselmotoren, die mit Luftüberschuß betrieben werden und deren Abgas somit regelmäßig ebenfalls einen Luftüberschuß aufweist, hierzu besonderer Maßnahmen.

Im Lichte des vorstehend erläuterten Standes der Technik liegt der vorliegenden Erfindung die Aufgabe zugrunde, ein Kraftfahrzeug der eingangs angegebenen Art zu schaffen, bei dem die Abgasreinigungsvorrichtung bei einem technisch relativ einfachen und kostengünstigen Aufbau der Abgasanlage und bei einem möglichst geringen Aufwand zuverlässig regeneriert werden kann.

Gelöst wird.diese Aufgabenstellung gemäß der vorliegenden Erfindung durch die folgenden Merkmale:
- stromaufwärts der Abgasreinigungsvorrichtung ist eine an den Kraftstofftank des Fahrzeugs angeschlossene Kraftstoffverdampfungseinheit vorgesehen, mittels derer das Motorabgas mit Kraftstoffdampf angereichert wird;
- die Kraftstoffverdampfungseinheit umfaßt einen Kraftstoffverdampfer in Form eines dem Abgasstrom ausgesetzten Wärmetauschers mit einer Kraftstoffzufuhr und einem Kraftstoffdampfaustritt sowie einen dem Wärmetauscher vorgeschalteten Hilfs-Oxidationskatalysator;
- der Gehalt an unverbranntem Dieselkraftstoff in dem dem Hilfs-Oxidationskatalysator zugeführten Abgas ist mittels einer Anfetteinrichtung einstellbar.

Das bei dem erfindungsgemäßen Kraftfahrzeug realisierte, der Regeneration einer nachgeschalteten Abgasreinigungsvorrichtung dienende System umfaßt somit eine Mehrzahl von Komponenten, die in spezifischer Weise aufeinander abgestimmt zusammenwirken. Eine jener Komponenten bildet ein als Wärmetauscher, welcher dem Abgasstrom ausgesetzt ist, ausgeführter Kraftstoffverdampfer, in welchem über die Kraftstoffzufuhr zugeführter Dieselkraftstoff aufgrund der dem Abgas entzogenen Wärme verdampft wird, wobei der Kraftstoffdampf den Kraftstoffverdampfer über einen Kraftstoffdampfaustritt verläßt. In dem dem Kraftstoffverdampfer vorgeschalteten Hilfs-Oxidationskatalysator wird das Abgas auf die für den effizienten Betrieb des Wärmetauschers erforderliche Temperatur aufgeheizt, und zwar durch katalytischer Verbrennung eines in dem Abgas vorhandenen Gehalts an unverbranntem Kraftstoff. Über eine Anfetteinrichtung ist jener Gehalt an unverbranntem Kraftstoff in dem dem Hilfs-Oxidationskatalysator zugeführten Abgas einstellbar. Als Anfetteinrichtung kommt dabei insbesondere eine spezifische Motorsteuerung in Betracht, die über motorische Maßnahmen während der Regeneration der Abgasreinigungsvorrichtung für den zur Aufheizung des Abgases in dem Hilfs-Oxidationskatalysator erforderlichen Gehalt an unverbranntem Kraftstoff im Abgas sorgt; die Anfetteinrichtung kann indessen auch einen eine elektrische Heizeinrichtung aufweisenden Hilfs-Verdampfer umfassen, der Kraftstoffdampf stromaufwärts des Hilfs-Oxidationskatalysators in das Abgas einspeist. Ebenso kann in der Anfetteinrichtung zumindest einen Teil des in dem Wärmetauscher erzeugten Kraftstoffdampfs dem Abgas zugeführt werden.

Das vorstehend erläuterte, bei erfindungsgemäßen Kraftfahrzeugen realisierte System läßt sich insbesondere sowohl für die Regeneration eines Partikelfilters wie auch für die Regeneration eines NOₓ-Speicherkatalysators oder die Regeneration einer kombinierten Abgasreinigungsvorrichtung einsetzen. Im zuerst genannten Fall wird der gesamte in dem Wärmetauscher erzeugte Kraftstoffdampf dem Abgasstrom stromaufwärts des Hilfs-Oxidationskatalysators zugeführt; die Anfettung des dem Hilfs-Oxidationskatalysators zugeführten Abgases erfolgt somit, nachdem die Regenerationsphase durch eine externe Anfetteinrichtung (z.B. Motorsteuerung bzw. Hilfsverdampfer, s.o.) eingeleitet worden ist, ausschließlich über den den Wärmetauscher verlassenden Kraftstoffdampf, wobei in Abhängigkeit von dem jeweiligen Betriebspunkt des Motors eine solche Menge an Kraftstoff verdampft und anschließend in dem Hilfs-Oxidationskatalysator katalytisch verbrannt wird, daß die Temperatur des Abgases hinter dem Wärmetauscher für die Regeneration des nachgeschalteten Partikelfilters ausreicht. Wird indessen das System nach der vorliegenden Erfindung zur Regeneration eines NOₓ-Speicherkatalysators eingesetzt, so wird mit ihm das dem NOₓ-Speicherkatalysator zugeführte Abgas angefettet. Hierfür kann insbesondere zumindest ein Teil des in dem Wärmetauscher erzeugten Kraftstoffdampfs dem Abgas hinter dem Hilfs-Oxidationskatalysator zugeführt werden, namentlich unmittelbar an dem Wärmetauscher selbst; in Betracht kommt indessen auch, daß sämtlicher in dem Wärmetauscher erzeugter Kraftstoffdampf stromaufwärts des Hilfs-Oxidationskatalysators in den Abgasstrom eingespeist wird, wobei der Grad der Umsetzung jenes Kraftstoffdampfs durch katalytische Verbrennung in dem Hilfe-Oxidationskatalysator durch den Luftüberschuß in dem Abgas begrenzt wird, so daß eine für die Regeneration des NOₓ-Speicherkatalysators erforderliche Anfettung des Abgases in der Kraftstoffverdampfungseinheit erfolgt.

Im Sinne der vorstehenden Erläuterungen zeichnet sich eine erste bevorzugte Weiterbildung des erfindungsgemäßen Kraftfahrzeugs dadurch aus, daß die Abgasreinigungsvorrichtung einen diskontinuierlich regenerierbaren Partikelfilter umfaßt, wobei der Hilfs-Oxidationskatalysator im Regenerationsbetrieb das dem Partikelfilter zuströmende Abgas unter katalytischer Verbrennung des in dem Wärmetauscher erzeugten, stromaufwärts des Hilfs-Oxidationskatalysators in den Abgasstrom eingespeisten Kraftstoffdampfs aufheizt.

Gemäß einer anderen bevorzugten Weiterbildung der vorliegenden Erfindung ist indessen vorgesehen, daß die Abgasreinigungsvorrichtung einen diskontinuierlich regenerierbaren NOₓ-Speicherkat umfaßt, wobei im Regenerationsbetrieb zumindest ein Teil des in dem Wärmetauscher erzeugten Kraftstoffdampfs dem Abgasstrom stromabwärts des Hilfs-Oxidationskatalysators zugesetzt wird.

Für beide Alternativen kann die Anfetteinrichtung eine spezifische Motorsteuerung oder einen eine elektrische Heizeinrichtung aufweisenden Hilfs-Verdampfer umfassen, wobei im zuletzt genannten Fall der Hilfs-Verdampfer Kraftstoffdampf stromaufwärts des Hilfs-Oxidationskatalysators in das Abgas einspeist.

Ist in dem vorstehend aufgezeigten Sinne ein Hilfs-Verdampfer vorgesehen, so ist dieser besonders bevorzugt in räumlicher Trennung zu abgasführenden Bauteilen angeordnet, wobei sich zwischen dem Hilfs-Verdampfer und einem abgasführenden Bauteil ein Kraftstoffdampfeinspeiskanal erstreckt, welcher stromaufwärts des Hilfs-Oxidationskatalysators in ein abgasführendes Bauteil mündet. Insbesondere ragt bei dieser Weiterbildung der Hilfs-Verdampfer nicht in eines der dem Hilfs-Oxidationskatalysator vorgeschalteten abgasführenden Bauteile hinein. Die räumliche Trennung des Hilfs-Verdampfer des von abgasführenden Bauteilen und die Einspeisung des durch den Hilfs-Verdampfer bereitgestellten Kraftstoffsdampfes in die Abgasleitung vor dem Hilfs-Oxidationskatalysator über einen Kraftstoffdampfeinspeiskanal verhindert, daß der Hilfs-Verdampfer im Betrieb des Fahrzeugs den erheblich schwankenden Abgastemperaturen ausgesetzt ist. Auf diese Weise lassen sich die Umgebungsbedingungen, unter denen der Hilfs-Verdampfer Kraftstoffdampf bereitzustellen hat, besser kontrollieren und vergleichmäßigen. Dies wiederum gestattet, den ein elektrisches Heizelement umfassenden Hilfs-Verdampfer hinsichtlich seiner Funktion so zu optimieren, daß er geeignet ist, mit gleichbleibend gutem Resultat Dieselkraftstoff zu verdampfen. Des weiteren wirkt sich die Zufuhr des durch den Hilfs-Verdampfer bereitgestellten Kraftstoffsdampfes in die Abgasleitung über einen Kraftstoffdampfeinspeiskanal dahingehend aus, daß die Strömungsverhältnisse innerhalb der Abgasleitung weniger beeinträchtigt werden als bei Einsatz herkömmlicher Brenner und daß ein deutlich gesteigertes Maß an Flexibilität hinsichtlich der räumlichen Anordnung bzw. Unterbringung des Hilfs-Verdampfer des besteht; letzteres ist bei modernen Fahrzeugen, bei denen bisweilen außerordentlich beengte Einbauverhältnisse für die Abgasanlage bestehen, von besonderem Vorteil.

Der Kraftstoffdampfeinspeiskanal kann insbesondere in eine als Venturi-Düse ausgebildete Querschnittsverengung des betreffenden abgasführenden Bauteils münden. Die hieraus resultierende Druckabsenkung in dem Kraftstoffdampfeinspeiskanal und dem Hilfs-Verdampfer begünstigt das Verdampfen des Dieselkraftstoffs und trägt durch entsprechende Absenkung des Siedebereichs zu einer Verringerung der für das Verdampfen benötigten elektrischen Energie bei.

Gemäß einer anderen bevorzugten Weiterbildung ist vorgesehen, daß der Hilfs-Verdampfer eine stehend angeordnete Glühkerze umfaßt, welche unter Einhaltung eines Ringspalts von einem Mantelrohr umgeben ist, in welches die Kraftstoffleitung und der Kraftstoffdampfeinspeiskanal münden. Die stehende Anordnung der Glühkerze begünstigt eine besonders homogene Verdampfung des in den zwischen der Glühkerze und dem Mantelrohr definierten Ringraum eingespeisten Dieselkraftstoffs. Ein besonders gutes Verdampfungsverhalten ergibt sich dabei, wenn die lichte Weite des genannten Ringspalts zwischen 0,6 mm und 2 mm beträgt. Bei einer solchen Dimensionierung ergeben sich im Hinblick auf das Verdampfungsergebnis optimale Verhältnisse der einzelnen Einflußgrößen wie Wärmeübertragung, Tröpfchenbildung durch Sieden, Kapillareffekte und dergleichen.

Als besonders günstig hat es sich herausgestellt, wenn in dem zwischen der Glühkerze und dem Mantelrohr bestehenden Ringspalt ein spiralförmiges Leitelement angeordnet ist. Dieses führt den erhitzten und siedenden Kraftstoff und anschließend den Kraftstoffdampf spiralförmig um die Glühkerze herum, so daß zum einen lokale Wärmeunterschiede auf der Oberfläche der Glühkerze ausgeglichen werden und durch den entsprechend längeren Strömungsweg eine Homogenisierung des aufbereiteten Kraftstoffsdampfes erfolgt. Zum anderen wirken infolge der Drallströmung auf eventuell entstehende Kraftstofftröpfchen Fliehkräfte, die deren Abscheiden an dem Mantelrohr begünstigen, so daß selbst bei besonders kompakt ausgeführten Hilfs-Verdampfern die Gefahr, daß Kraftstofftröpfchen in den Abgasstrom gelangen, sehr gering ist. Noch weiter reduzieren läßt sich diese Gefahr dadurch, daß der Kraftstoffdampfeinspeiskanal mit seinem dem Hilfs-Verdampfer zugeordneten Ende in das Mantelrohr oberhalb der Glühkerze hineinragt. Denn in diesem Falle liegt dergestalt eine zyklonartige Funktion der aus dem Hilfs-Verdampfer und dem Kraftstoffdampfeinspeiskanal gebildeten Einheit vor, daß der aus dem Hilfs-Verdampfer entnommene Kraftstoffdampf frei ist von allen fliehkraftbedingt radial nach außen in Richtung auf das Mantelrohr driftenden Kraftstofftröpfchen.

Das Mantelrohr kann von einem Isolator umgeben sein. Hierdurch läßt sich mit dem Ziel einer weitergehenden Optimierung des Verdampfungsvorganges das Milieu, in welchem der Hilfs-Verdampfer arbeitet, weiter vergleichmäßigen.

Was die Dimensionierung des Kraftstoffdampfeinspeiskanals angeht, so beträgt besonders bevorzugt im Bereich der Mündung des Kraftstoffdampfeinspeiskanals das Verhältnis des Querschnitts des Kraftstoffdampfeinspeiskanals zum Querschnitt des abgasführenden Bauteils zwisehen 0,006 und 0,015. Dieses Verhältnis erweist sich als besonders günstig im Hinblick auf eine ausreichend gute Vermischung des in den Abgasstrom eingespeisten Kraftstoffdampfes ohne Beeinträchtigung der Strömungsverhältnisse in der Abgasleitung außerhalb des Regenerationsbetriebs.

Im Falle des Einsatzes des erfindungsgemäßen Systems zur Regeneration eines Partikelfilters zeichnet sich eine andere bevorzugte Weiterbildung der vorliegenden Erfindung dadurch aus, daß zwischen dem Hilfs-Oxidationskatalysator und dem Partikelfilter ein Temperatursensor angeordnet ist, welcher mit einer Steuereinheit in Verbindung steht, welche während des Regenerationsbetriebs die Förderleistung einer die Kraftstoffverdampfungseinheit speisenden Kraftstoffpumpe in Abhängigkeit von der ermittelten Abgastemperatur vor dem Partikelfilter steuert. In diesem Falle läßt sich durch entsprechende automatische Variation der der Kraftstoffverdampfungseinheit durch die Kraftstoffpumpe zugeführten Kraftstoffmenge der jeweilige Motorbetriebspunkt und die Abhängigkeit der Abgastemperatur von diesem berücksichtigen mit dem Ergebnis, daß sich durch entsprechende Anpassung der verdampften Kraftstoffmenge die Abgastemperatur vor dem Partikelfilter auf einen für die Regeneration des betreffenden Filters optimale Temperatur (z.B. 650 °C) einregeln läßt.

Im folgenden wird die vorliegende Erfindung anhand zweier in der Zeichnung schematisch veranschaulichter bevorzugter Ausführungsbeispiele erläutert, Dabei zeigt
- Fig. 1: den maßgeblichen Abschnitt einer Abgasanlage für ein Kraftfahrzeug, deren Abgasreinigungsvorrichtung einen regelmäßig zu regenerierenden NOₓ-Speicherkatalysator umfaßt,
- Fig. 2: die Einbindung des in Fig. 1 veranschaulichten Abschnitts einer Abgasanlage in ein Fahrzeug,
- Fig. 3: den maßgeblichen Ausschnitt einer Abgasanlage für ein Kraftfahrzeug, deren Abgasreinigungsvorrichtung einen regelmäßig zu regenerierenden Partikelfilter umfaßt, und
- Fig. 4: die mögliche Ausführung eines bei den Abgasanlagen nach den Fig. 1 und 2 eingesetzten Hilfs-Verdampfers.

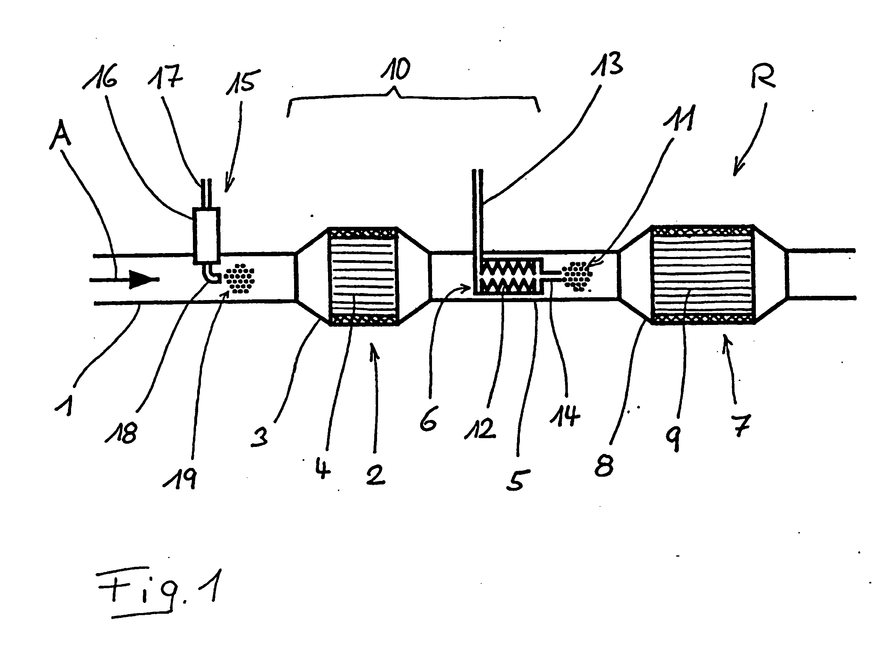

Der in Fig. 1 wiedergegebene Ausschnitt der Abgasanlage eines durch einen Dieselmotor angetriebenen Kraftfahrzeugs umfaßt - in Strömungsrichtung A nacheinander - ein Vorrohr 1, einen Hilfs-Oxidationskatalysator 2 mit einem in einem Gehäuse 3 angeordneten Katalysatorkörper 4, ein Zwischenrohr 5 mit einem darin angeordneten Kraftstoffverdampfer 6 und einen NOₓ-Speicherkatalysator 7 mit einem Gehäuse 8 und einem darin angeordneten Katalysatorkörper 9. Der NOₓ-Speicherkatalysator 7 bildet die in regelmäßigen Abständen zu regenerierende Abgasreinigungsvorrichtung R. Der Hilfs-Oxidationskatalysator 2 und der Kraftstoffverdampfer 6 bilden gemeinsam eine Kraftstoffverdampfungseinheit 10, mittels welcher dem das Zwischenrohr 5 durchströmenden Abgas Kraftstoffdampf 11 zugeführt wird.

Der Kraftstoffverdampfer 6 ist als Wärmetauscher 12 ausgeführt, in dem Dieselkraftstoff, welcher dem Wärmetauscher über die Kraftstoffzufuhr 13 zugeführt wird, unter Nutzung der in dem Abgas enthaltenen Wärme verdampft wird, wobei der Kraftstoffdampf 11 den Wärmetauscher 7 über den Kraftstoffdampfaustritt 14 verläßt.

Der gesamte in dem Wärmetauscher 12 erzeugte Kraftstoffdampf wird dem das Zwischenrohr 5 durchströmenden Abgas zugesetzt.

Als Anfetteinrichtung 15, mittels derer sich der Gehalt an unverbranntem Dieselkraftstoff in dem dem Hilfs-Oxidationskatalysator 2 zugeführten Abgas einstellen läßt, ist ein Hilfs-Verdampfer 15 vorgesehen. Dieser umfaßt eine elektrische Heizeinrichtung in Form einer Glühkerze, an der Dieselkraftstoff, welcher dem Hilfs-verdampfer über die Kraftstoffzufuhr 17 zugeführt wird, verdampft wird. Der entsprechende Kraftstoffdampf 18 verläßt den Hilfs-Verdampfer 16 über den in das Vorrohr 1 mündenden Kraftstoffdampfaustritt 19.

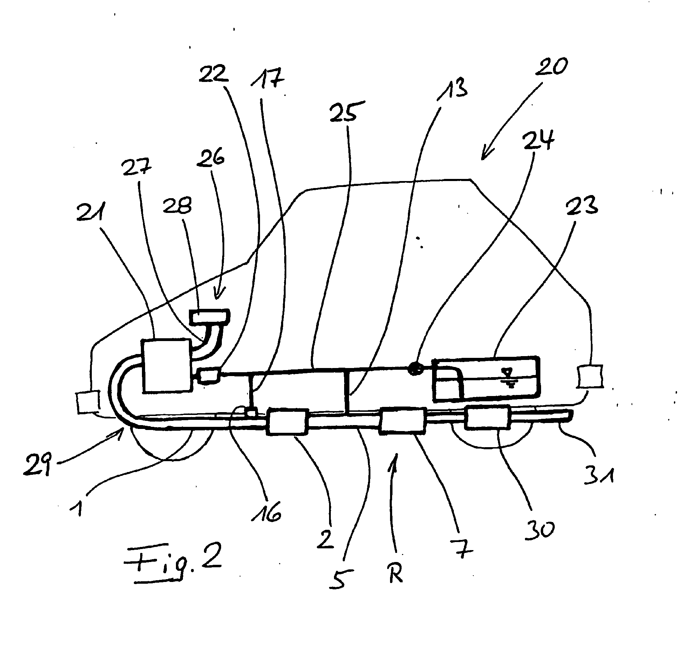

Die Einbettung des in Fig. 1 dargestellten und vorstehend erläuterten Ausschnitts einer Abgasanlage in das zugeordenete Kraftfahrzeug ist in Fig. 2 dargestellt. Die dort verwendeten Bezugszeichen stimmen mit denjenigen nach Fig. 1 überein. Das Kraftfahrzeug 20 umfaßt in als solches bekannter Weise einen als Dieselmotor ausgeführten Antriebsmotor 21. Diesem ist eine Einspritzpumpe 22 zugeordnet, welche aus einem Kraftstofftank 23 über eine Förderpumpe 24 und die Kraftstoffleitung 25 mit Dieselkraftstoff gespeist wird. Das einlaßseitig angeordnete Ansaugsystem 26 umfaßt einen Ansaugkrümmer 27 und einen Luftfilter 28. Der Aufbau des Abgassystems 29 ergibt aus der vorstehenden Erläuterung der Fig. 1. Fig. 2 zeigt dabei, daß sowohl die Kraftstoffzufuhr 13, welche den Kraftstoffverdampfer 6 (vgl. Fig. 1) mit Dieselkraftstoff versorgt, als auch die Kraftstoffzufuhr 17, welche den Hilfs-Verdampfer 16 mit Dieselkraftstoff versorgt, an die Kraftstoffleitung 25 angeschlossen sind.

Zusätzlich zu den der Reinigung des Abgases dienenden Einrichtungen umfaßt die Abgasanlage 29 einen konventionellen Schalldämpfer 30, an welchen das Endrohr 31 angeschlossen ist..

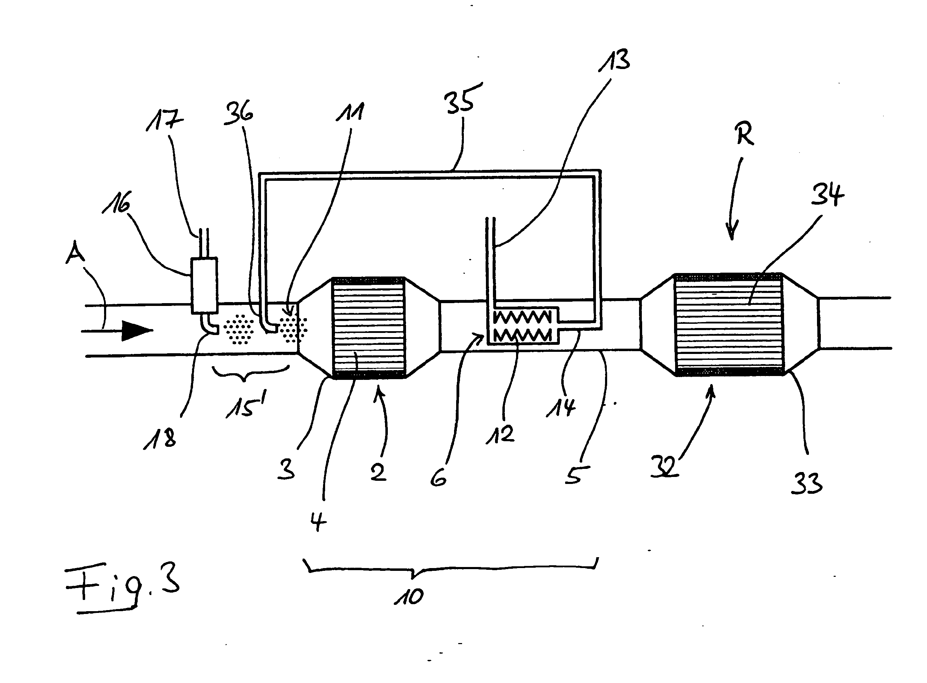

Fig. 3 veranschaulicht einen möglichen Aufbau der Abgasanlage, wenn als regelmäßig zu regenierende Abgasreinigungsvorrichtung R ein Partikelfilter 32 vorgesehen ist, welcher einen - in als solches bekannter Weise - in einem Gehäuse 33 gelagerten Filterkörper 34 umfaßt.

Abweichend von der in Fig. 1 veranschaulichten Anordnung verläßt hier der in dem Kraftstoffverdampfer 6 erzeugte Kraftstoffdampf den Kraftstoffaustritt 14 nicht zwischen dem Kraftstoffverdampfer 6 und dem Partikelfilter 32. Vielmehr wird der in dem Kraftstoffverdampfer erzeugte Kraftstoffdampf über eine Dampfleitung 35 vor den Hilfs-Oxidationskatalysator 2 geführt. Der in dem Kraftstoffverdampfer 6 erzeugte Kraftstoffdampf 11 wird somit dem Abgasstrom stromaufwärts des Hilfs-Oxidationskatalysators 2 zugeführt. Der Kraftstoffdampf 11 dient somit der Anfettung des dem Hilfs-Oxidationskatalysator 2 zuströmenden Abgases. Auf diese Weise bildet die Einspeisung 36, über die der Kraftstoffdampf 11 in das Abgas eingebracht wird, einen Teil der Anfetteinrichtung 15'. Diese umfaßt neben der Einspeisung 36 für den im Kraftstoffverdampfer 6 erzeugten Kraftstoffdampf 11 einen Hilfs-Verdampfer 16, wie er weiter oben im Zusammenhang mit Fig. 1 beschrieben wurde.

Im Lichte der Erläuterung der vorliegenden Erfindung in der Beschreibung lassen sich die in der Zeichnung veranschaulichten Systeme ohne weiteres dahingehend modifizieren, daß sie zur Regeneration einer kombinierten, einen NOₓ-Speicherkatalysator sowie einen Partikelfilter umfassenden Abgasreinigungsvorrichtung geeignet sind.

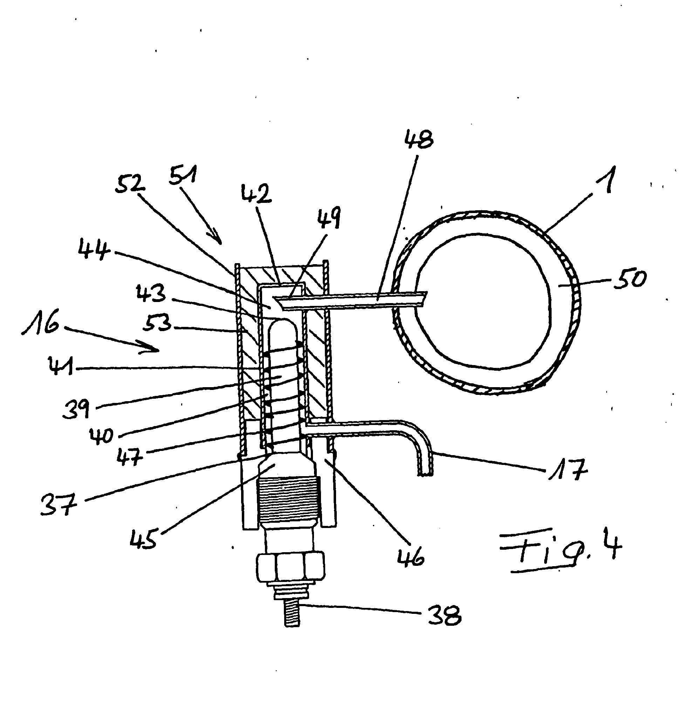

Der in Fig. 4 veranschaulichte Hilfs-Verdampfer 16 umfaßt ein elektrisches Heizelement in Form einer Glühkerze 37 in stehender Anordnung. An den elektrischen Anschluß 38 ist ein elektrisches Anschlußkabel anschließbar. Der zylindrische Glühstift 39 der Glühkerze 37 ist unter Einhaltung eines eine lichte Weite von 1 mm aufweisenden Ringspalts 40 von einem Mantelrohr 41 umgeben. Das Mantelrohr ist stirnseitig durch einen Deckel 42 dicht verschlossen, wobei durch einen entsprechenden Abstand des Deckels 42 zur Spitze 43 des Glühstifts 39 ein Dampfentnahmeraum 44 gebildet wird. Zum Sockel 45 der Glühkerze 37 hin ist das Mantelrohr 41 über die Fassung 46 dicht abgeschlossen.

In dem Ringspalt 40 ist ein spiralförmiges Leitelement 47 untergebracht., welches den Glühstift 39 wendelförmig umgibt. Die Kraftstoffzufuhr 17 mündet in dem Mantelrohr 41 benachbart zum Sockel 45 der Glühkerze 37.

Ein den Hilfs-Verdampfer 16 mit dem Vorrohr 1 verbindender röhrchenförmiger Kraftstoffdampfeinspeiskanal 48 ragt mit seinem dem Hilfs-Verdampfer 16 zugeordneten, einen Kraftstoffdampfentnahmestutzen 49 bildenden Ende in den Dampfentnahmeraum 44 hinein. Das dem Vorrohr 1 zugeordnete Ende des Kraftstoffdampfeinspeiskanals 48 ragt in das Vorrohr 1 hinein, und zwar im engsten Querschnitt eines in das Vorrohr 1 eingesetzten Venturi-Einsatzes 50.

Der Hilfs-Verdampfer 16 umfaßt einen das Mantelrohr 41 umgebenden Isolator 51, welcher ein Hüllrohr 52 und eine den zwischen dem Mantelrohr 41 und dem Hüllrohr 52 bestehenden Zwischenraum ausfüllende Dämmung 53 umfaßt.

## Patentansprüche

1. Kraftfahrzeug (20) mit einem Diesel-Antriebsmotor (21), dessen Abgasanlage (29) eine diskontinuierlich regenerierbare Abgasreinigungsvorrichtung (R) aufweist,
**gekennzeichnet durch** die folgenden Merkmale: stromaufwärts der Abgasreinigungsvorrichtung (R) ist eine an den Kraftstofftank (23) des Fahrzeugs angeschlossene Kraftstoffverdampfungseinheit (10) vorgesehen, mittels derer das Motorabgas mit Kraftstoffdampf (11) angereichert wird;
die Kraftstoffverdampfungseinheit (10) umfaßt einen Kraftstoffverdampfer (6) in Form eines dem Abgasstrom ausgesetzten Wärmetauschers (12) mit einer Kraftstoffzufuhr (13) und einem Kraftstoffdampfaustritt (14) sowie einen dem Wärmetauscher (12) vorgeschalteten Hilfs-Oxidationskatalysator (2);
der Gehalt an unverbranntem Dieselkraftstoff in dem dem Hilfs-Oxidationskatalysator (2) zugeführten Abgas ist mittels einer Anfetteinrichtung (15, 15') einstellbar.

2. Kraftfahrzeug nach Anspruch 1,
**dadurch gekennzeichnet,**
**daß** die Abgasreinigungsvorrichtung (R) einen diskontinuierlich regenerierbaren Partikelfilter (32) umfaßt, wobei der Hilfs-Oxidationskatalysator (2) im Regenerationsbetrieb das dem Partikelfilter (32) zuströmende Abgas unter katalytischer Verbrennung des in dem Wärmetauscher (12) erzeugten, stromaufwärts des Hilfs-Oxidationskatalysators (2) in den Abgasstrom eingespeisten Kraftstoffdampfs (11) aufheizt.

3. Kraftfahrzeug nach Anspruch 1,
**dadurch gekennzeichnet,**
**daß** die Abgasreinigungsvorrichtung (R) einen diskontinuierlich regenerierbaren NOₓ- Speicherkatalysator (7) umfaßt, wobei im Regenerationsbetrieb zumindest ein Teil des in dem Wärmetauscher (12) erzeugten Kraftstoffdampfs (11) dem Abgasstrom stromabwärts des Hilfs-Oxidationskatalysators (2) zugesetzt wird.

4. Kraftfahrzeug nach einem der Ansprüche 1 bis 3,
**dadurch gekennzeichnet,**
**daß** die Anfetteinrichtung eine spezifische Motorsteuerung umfaßt.

5. Kraftfahrzeug nach einem der Ansprüche 1 bis 3,
**dadurch gekennzeichnet,**
**daß** die Anfetteinrichtung (15, 15') einen eine elektrische Heizeinrichtung aufweisenden Hilfs-Verdampfer (16) umfaßt, der Kraftstoffdampf stromaufwärts des Hilfs-Oxidationskatalysators (2) in das Abgas einspeist.

6. Kraftfahrzeug nach Anspruch 5,
**dadurch gekennzeichnet,**
**daß** der Hilfs-Verdampfer (16) in räumlicher Trennung zu abgasführenden Bauteilen angeordnet ist, wobei sich zwischen dem Hilfs-Verdampfer und einem abgasführenden Bauteil ein Kraftstoffdampfeinspeiskanal (48) erstreckt, welcher stromaufwärts des Hilfs-Oxidationskatalysators (2) in ein abgasführendes Bauteil mündet.

7. Kraftfahrzeug nach Anspruch 6,
**dadurch gekennzeichnet,**
**daß** der Kraftstoffdampfeinspeiskanal (48) in eine als Venturi-Düse ausgebildete Querschnittsverengung des betreffenden abgasführenden Bauteils mündet.

8. Kraftfahrzeug nach Anspruch 6 oder Anspruch 7,
**dadurch gekennzeichnet,**
**daß** der Hilfs-Verdampfer (16) eine stehend angeordnete Glühkerze (37) umfaßt, welche unter Einhaltung eines Ringspalts (40) von einem Mantelrohr (41) umgeben ist, in welches eine Kraftstoffzufuhr (17) und der Kraftstoffdampfeinspeiskanal (48) münden.

9. Kraftfahrzeug nach Anspruch 8,
**dadurch gekennzeichnet,**
**daß** die lichte Weite des Ringspalts (40) zwischen 0,6 mm und 2 mm beträgt.

10. Kraftfahrzeug nach Anspruch 8 oder Anspruch 9,
**dadurch gekennzeichnet,**
**daß** in dem Ringspalt (40) ein spiralförmiges Leitelement (47) angeordnet ist.

11. Kraftfahrzeug nach einem der Ansprüche 8 bis 10,
**dadurch gekennzeichnet,**
**daß** der Kraftstoffdampfeinspeiskanal (48) mit seinem dem Hilfs-Verdampfer (16) zugeordneten Ende in das Mantelrohr (41) hineinragt.

12. Kraftfahrzeug nach einem der Ansprüche 8 bis 11,
**dadurch gekennzeichnet,**
**daß** das Mantelrohr (41) von einem Isolator (51) umgeben ist.

13. Kraftfahrzeug nach einem der Ansprüche 8 bis 12,
**dadurch gekennzeichnet,**
**daß** im Bereich der Mündung des Kraftstoffdampfeinspeiskanals (48) das Verhältnis des Querschnitts des Kraftstoffdampfeinspeiskanals zum Querschnitt des abgasführenden Bauteils zwischen 0,006 und 0,015 beträgt.

## Claims

1. A motor vehicle (20) having a diesel drive engine (21), the exhaust system (29) of which includes an exhaust gas purification device (R) that is adapted to be discontinuously regenerated,
**characterized by** the following features:
a fuel vaporization unit (10) is provided upstream of the exhaust gas purification device (R), which unit is connected to the fuel tank (23) of the vehicle and by means of which the engine exhaust gas is enriched with fuel vapor (11);
the fuel vaporization unit (10) includes a fuel evaporator (6) in the form of a heat exchanger (12) which is exposed to the exhaust gas flow and has a fuel supply (13) and a fuel vapor outlet (14), and an auxiliary oxidation catalytic converter (2) that is arranged upstream of the heat exchanger (12);
the percentage of unburned diesel fuel in the exhaust gas fed into the auxiliary oxidation catalytic converter (2) can be adjusted using an enrichment means (15, 15').

2. The motor vehicle according to Claim 1,
**characterized in that**
the exhaust gas purification device (R) comprises a particulate filter (32) that is adapted to be discontinuously regenerated, the auxiliary oxidation catalytic converter (2) heating up the exhaust gas streaming into the particulate filter (32) in the regeneration operation while catalytically burning the fuel vapor (11) generated in the heat exchanger (12) and fed into the exhaust gas flow upstream of the auxiliary oxidation catalytic converter (2).

3. The motor vehicle according to Claim 1
**characterized in that**
the exhaust gas purification device (R) comprises a NOₓ-storage catalytic converter (7) that is adapted to be discontinuously regenerated, at least part of the fuel vapor (11) generated in the heat exchanger (12) being added to exhaust gas flow downstream of the auxiliary oxidation catalytic converter (2) in the regeneration operation.

4. The motor vehicle according to any of Claims 1 to 3,
**characterized in that**
the enrichment means includes a specific engine control means.

5. The motor vehicle according to any of Claims 1 to 3,
**characterized in that**
the enrichment means (15, 15') comprises an auxiliary evaporator (16) that includes an electric heating means and feeds fuel vapor into the exhaust gas upstream of the auxiliary oxidation catalytic converter (2).

6. The motor vehicle according to Claim 5,
**characterized in that**
the auxiliary evaporator (16) is arranged so as to be spatially separated from exhaust gas carrying components, a fuel vapor feed duct (48) extending between the auxiliary evaporator and an exhaust gas carrying component and opening into an exhaust gas carrying component upstream of the auxiliary oxidation catalytic converter (2).

7. The motor vehicle according to Claim 6,
**characterized in that**
the fuel vapor feed duct (48) opens into a cross-sectional restriction configured as a venturi tube of the exhaust gas carrying component concerned.

8. The motor vehicle according to Claim 6 or Claim 7,
**characterized in that**
the auxiliary evaporator (16) includes a glow plug (37) which is arranged upright and surrounded by a jacket tube (41), keeping an annular gap (40), a fuel supply (17) and the fuel vapor feed duct (48) opening into the jacket tube.

9. The motor vehicle according to Claim 8,
**characterized in that**
the inner width of the annular gap (40) amounts to between 0.6 mm and 2 mm.

10. The motor vehicle according to Claim 8 or Claim 9,
**characterized in that**
a helical guide member (47) is arranged in the annular gap (40).

11. The motor vehicle according to any of Claims 8 to 10,
**characterized in that**
the fuel vapor feed duct (48) projects into the jacket tube (41) by its end associated with the auxiliary evaporator (16).

12. The motor vehicle according to any of Claims 8 to 11,
**characterized in that**
the jacket tube (41) is surrounded by an insulator (51).

13. The motor vehicle according to any of Claims 8 to 12,
**characterized in that**
in the region of the opening of the fuel vapor feed duct (48), the ratio of the cross-section of the fuel vapor feed duct to the cross-section of the exhaust gas carrying component amounts to between 0,006 and 0,015.

## Revendications

1. Véhicule automobile (20) comportant un moteur d'entraînement diesel (21), dont le système de gaz d'échappement (29) présente un dispositif d'épuration (R) des gaz d'échappement à régénération discontinue,
**caractérisé par** les caractéristiques suivantes :
en amont du dispositif d'épuration (R) des gaz d'échappement est prévue une unité de vaporisation de carburant (10) branchée au réservoir de carburant (23) du véhicule, au moyen de laquelle le gaz d'échappement du moteur est enrichi de vapeur de carburant (11) ;
l'unité de vaporisation de carburant (10) comprend un vaporisateur de carburant (6) sous la forme d'un échangeur de chaleur (12) exposé aux flux d'échappement, comportant une conduite d'amenée de carburant (13) et une sortie de vapeur de carburant (14), ainsi qu'un catalyseur d'oxydation auxiliaire (2) monté en amont de l'échangeur de chaleur (12) ;
la teneur en carburant diesel imbrûlé dans le gaz d'échappement amené au catalyseur d'oxydation auxiliaire (2) est réglable au moyen d'un dispositif d'enrichissement (15, 15').

2. Véhicule automobile selon la revendication 1,
**caractérisé en ce que**
le dispositif d'épuration de gaz d'échappement (R) comprend un filtre à particules (32) à régénération discontinue, le catalyseur d'oxydation auxiliaire (2) chauffant, en mode opératoire de régénération, le gaz d'échappement affluant vers le filtre à particules (32) par combustion catalytique de la vapeur de carburant (11) produite dans l'échangeur de chaleur (12) et alimentée dans le flux de gaz d'échappement en amont du catalyseur d'oxydation auxiliaire (2).

3. Véhicule automobile selon la revendication 1,
**caractérisé en ce que**
le dispositif d'épuration de gaz d'échappement (R) comprend un catalyseur accumulateur de NOₓ, particules (32) à régénération discontinue, au moins une partie de la vapeur de carburant (11) produite dans l'échangeur de chaleur (12) étant ajoutée en mode opératoire de régénération au flux de gaz d'échappement en aval du catalyseur d'oxydation auxiliaire (2).

4. Véhicule automobile selon l'une des revendications 1 à 3,
**caractérisé en ce que**
le dispositif d'enrichissement comprend une commande de moteur spécifique.

5. Véhicule automobile selon l'une des revendications 1 à 3,
**caractérisé en ce que**
le dispositif d'enrichissement (15, 15') comprend un vaporisateur auxiliaire (16) présentant un dispositif de chauffage électrique, lequel alimente de la vapeur de carburant dans le gaz d'échappement en amont du catalyseur d'oxydation auxiliaire (2).

6. Véhicule automobile selon la revendication 5
**caractérisé en ce que**
le vaporisateur auxiliaire (16) est agencé de manière à être séparé dans l'espace par rapport à des composants conducteurs de gaz d'échappement, un canal d'alimentation de vapeur de carburant (48) s'étendant entre le vaporisateur auxiliaire et un composant conducteur de gaz d'échappement, canal qui débouche dans un composant conducteur de gaz d'échappement en amont du catalyseur d'oxydation auxiliaire (2).

7. Véhicule automobile selon la revendication 6,
**caractérisé en ce que** le canal d'alimentation de vapeur de carburant (48) débouche dans un étranglement de section transversale, réalisé sous forme de venturi, du composant conducteur de gaz d'échappement concerné.

8. Véhicule automobile selon la revendication 6 ou la revendication 7,
**caractérisé en ce que**
le vaporisateur auxiliaire (16) comprend une bougie de préchauffage (37) agencée debout qui, en maintenant une fente annulaire (40), est entourée par un tube enveloppe (41) dans lequel débouchent une conduite d'amenée de carburant (17) et le canal d'alimentation de vapeur de carburant (48).

9. Véhicule automobile selon la revendication 8,
**caractérisé en ce que**
la largeur intérieure de la fente annulaire (40) est entre 0,6 mm et 2 mm.

10. Véhicule automobile selon la revendication 8 ou la revendication 9,
**caractérisé en ce que**
dans la fente annulaire (40) est agencé un élément conducteur (47) en forme de spirale.

11. Véhicule automobile selon l'une des revendications 8 à 10,
**caractérisé en ce que**
le canal d'alimentation de vapeur de carburant (48) fait saillie dans le tube enveloppe (41) avec son extrémité associée au vaporisateur auxiliaire (16).

12. Véhicule automobile selon l'une des revendications 8 à 11,
**caractérisé en ce que**
le tube enveloppe (41) est entouré par un isolateur (51).

13. Véhicule automobile selon l'une des revendications 8 à 12,
**caractérisé en ce que**
dans la zone de l'embouchure du canal d'alimentation de vapeur de carburant (48), le rapport entre la section transversale du canal d'alimentation de vapeur de carburant et la section transversale du composant conducteur de gaz d'échappement est entre 0,006 et 0,015.
